# EUROPÄISCHE PATENTSCHRIFT

(11) **EP 3 776 919 B1**
(45) Veröffentlichungstag und Bekanntmachung des Hinweises auf die Patenterteilung: **01.01.2025**
(21) Anmeldenummer: 19717273.7
(22) Anmeldetag: 08.04.2019
(51) Int. Cl.: H04B 10/114, H04B 10/00, G02B 6/36, H04B 10/80

(54) **OPTISCHE SENDE/EMPFANGS-EINHEIT UND VORRICHTUNG ZUR SIGNALÜBERTRAGUNG**
OPTICAL TRANSCEIVER UNIT AND DEVICE FOR SIGNAL TRANSMISSION
UNITÉ D'ÉMISSION/RÉCEPTION OPTIQUE ET DISPOSITIF DE TRANSMISSION DE SIGNAL

(30) Priorität: 12.04.2018 DE 102018205559
(43) Veröffentlichungstag der Anmeldung: 17.02.2021
(73) Patentinhaber: Fraunhofer-Gesellschaft zur Förderung der angewandten Forschung e.V., 80686 München (DE)
(72) Erfinder: SCHNEIDER, Tobias, 01109 Dresden (DE)
(74) Vertreter: Zimmermann, Tankred Klaus
(86) Internationale Anmeldenummer: PCT/EP2019/058821
(87) Internationale Veröffentlichungsnummer: WO 2019/197343

(56) Entgegenhaltungen:
- EP-A1- 0 683 574
- WO-A1-2016/028226
- US-A- 5 790 291
- US-A1- 2011 058 817
- US-A1- 2012 057 818

## Beschreibung

Die vorliegende Erfindung bezieht sich auf das Gebiet der Signalübertragung, insbesondere auf die optische Datenübertragung über zwei Bauteile, die zueinander drehbar angeordnet sind. Ausführungsbeispiele betreffen eine optische Sende/Empfangs-Einheit, insbesondere eine rotationsfähige optische Kurzstrecken-Sende/Empfangs-Einheit für die optische, drahtlose Datenübertragung unter Verwendung eines speziellen Optikdesigns.

Im Stand der Technik sind verschiedene Ansätze bekannt, um eine Signalübertragung zu ermöglichen, beispielsweise eine Datenübertragung zwischen zwei Bauteilen, die zueinander drehbar angeordnet sind. Entweder sind beide Bauteile drehbar gelagert oder eines der Bauteile ist relativ zum anderen drehbar angeordnet. Herkömmliche Ansätze lösen das Problem der Datenübertragung über zwei zueinander rotierende Bauteile durch den Einsatz von Kabeln, wobei zur Übertragung der elektrischen Signale an der Rotationsstelle Schleifringe oder Kontaktbürsten eingesetzt werden. Solche, kontaktbehafteten Signalübertragungsansätze sind nachteilhaft, da aufgrund der kontaktbehafteten Übertragungstechnik die Lebensdauer der Rotationsstelle und damit auch die Lebensdauer des Gesamtsystems reduziert bzw. begrenzt ist, insbesondere aufgrund des Verschleißes der Kontakte. Ferner bewirkt die allseitige Signalausbreitung des elektrischen Signals auf dem Schleifring eine Mehrwegausbreitung, die zu Laufzeitunterschieden der einzelnen elektrischen Signale führen kann, was eine Limitierung der Übertragungsbandbreite hervorrufen kann.

Andere, im Stand der Technik bekannte Ansätze zur Vermeidung der Nachteile kontaktbehafteter Übertragungstechniken bei der Signalübertragung über eine Rotationsstelle verwenden eine optische, drahtlose Datenübertragung unter Verwendung von optischen Sende/Empfangs-Einheiten oder Transceivern, die in den relativ zueinander drehbar angeordneten Bauteilen vorgesehen sind. Dieser optische Ansatz hat den Vorteil, dass diese verschleißfrei arbeiten und damit die Lebensdauer des Gesamtsystems nicht begrenzen. Auch wird die oben erwähnte Mehrwegausbreitung des Signals vermieden, so dass mit solchen optischen, drahtlosen Datenübertragungssystemen eine Limitierung der Übertragungsbandbreite vermieden wird, so dass hohe Datenraten, beispielsweise von 100 Mbit/s und mehr erreichbar sind.

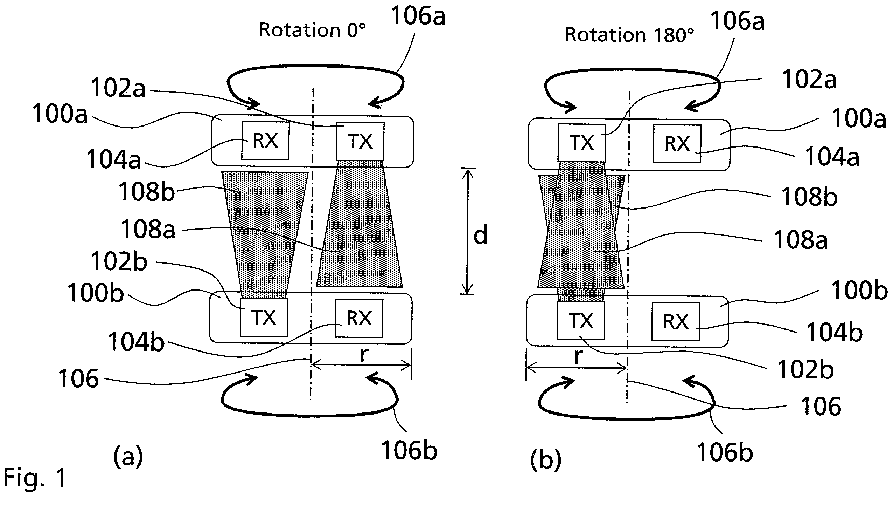

Fig. 1 zeigt eine schematische Darstellung einer herkömmlichen Signalübertragungsvorrichtung umfassend zwei optische, drahtlose Sende/Empfangs-Einheiten, wobei Fig. 1 (a) eine Stellung der zwei optischen Sende/Empfangs-Einheiten mit einer intakten Datenverbindung bzw. einem intakten Datenlink zwischen denselben darstellt, und wobei Fig. 1(b) die zwei Sende/Empfangs-Einheiten verdreht zueinander darstellt, so dass die Datenverbindung unterbrochen ist.

Fig. 1(a) zeigt eine erste Sende/Empfangs-Einrichtung 100a, die einen optischen Sender 102a und einen optischen Empfänger 104a aufweist. In Fig. 1(a) ist ferner eine Drehachse 106 dargestellt, um die die erste Sende/Empfangs-Einheit 100a drehbar ist. Der optische Sender 102a und der optische Empfänger 104a sind beabstandet von der Drehachse 106 in der Sende/Empfangs-Einheit 100a angeordnet. Der optische Sender 102a erzeugt für die optische Datenübertragung einen ersten Sendestrahl 108a, der in Richtung einer zweiten Sende/Empfangs-Einheit 100b gerichtet ist. Die zweite Sende/Empfangs-Einheit umfasst ihrerseits einen optischen Sender 102b und einen optischen Empfänger 104b, die beidseitig zur Drehachse 106 angeordnet sind. Die zweite Sende/Empfangs-Einheit ist um die Drehachse 106 drehbar angeordnet, wie dies durch den Pfeil 106b angedeutet ist. Bei dem in Fig. 1(a) dargestellten Beispiel sind die zwei Sende/Empfangs-Einheiten 100a, 100b so zueinander ausgerichtet, dass der optische Sender 102a in der ersten Sende/Empfangs-Einheit 100a dem optischen Empfänger 104b in der zweiten Sende/Empfangs-Einheit 102b gegenüberliegt, und dass der optische Sender 102b der zweiten Sende/Empfangs-Einheit 100b dem optischen Empfänger 104a in der ersten Sende/Empfangs-Einheit 100a gegenüberliegt. Die von den optischen Sendern 102a bzw. 102b ausgestrahlten Sendestrahlen 108a und 108b sind auf die gegenüberliegenden optischen Empfänger 104b bzw. 104a gerichtet. Bei einer Ausrichtung der zwei Sende/Empfangs-Einheiten 100a, 100b entsprechend der Darstellung in Fig. 1(a) ist eine bidirektionale Datenübertragung oder eine unidirektionale Datenübertragung, wenn nur einer der optischen Sender eingesetzt wird, möglich. Mit anderen Worten ist die Datenverbindung zwischen den zwei Sende/Empfangs-Einheiten 100a, 100b intakt.

Der Nachteil der anhand der Fig. 1 (a) dargestellten, konventionellen Vorrichtung zur optischen, drahtlosen Datenübertragung über eine Rotationsstelle besteht darin, dass eine Ausrichtung der entsprechenden Sender/Empfänger der zwei drehbaren bzw. relativ zueinander verdrehbaren Sende/Empfangs-Einheiten vorliegen muss, so dass, mit anderen Worten, Sender und Empfänger im Sichtkontakt zueinander stehen. Kommt es jedoch zu einer Verdrehung der Sende/Empfangs-Einheiten 100a, 100b aus der in Fig. 1(a) dargestellten Lage zueinander, beispielsweise bei einer Drehung oder Rotation der ersten Sende/Empfangs-Einheit 100a bezogen auf die zweite Sende/Empfangs-Einheit 100b um beispielsweise 180°, wie es in Fig. 1(b) dargestellt ist, so liegen sich Sender und Empfänger nicht mehr gegenüber. Vielmehr liegen sich, wie zu erkennen ist, die entsprechenden Sender bzw. die entsprechenden Empfänger in den zwei Sende/Empfangs-Einheiten 100a, 100b gegenüber. Mit anderen Worten besteht zwischen Sender und Empfänger in den zwei gegenüberliegenden Sende/Empfangs-Einheiten kein Sichtkontakt bzw. der Sichtkontakt geht verloren, so dass die Datenverbindung unterbrochen wird.

Die US 4,401,360 A beschreibt einen optischen Schleifring für eine optische Kommunikation zwischen einem Paar von Elementen, die sich frei zueinander drehen können. Diese Elemente können ein Paar von optischen Fasern, ein elektrischer Leiter und eine optische Faser oder ein Paar von elektrischen Leitern sein. Ein Element ist an einer ersten Montagevorrichtung angebracht und das andere Element ist an einer zweiten Montagevorrichtung befestigt. Ein optischer Empfänger ist in der Mitte der ersten Montagevorrichtung auf einer gemeinsamen Drehachse in Bezug auf die zweite Montagevorrichtung positioniert. Der andere optische Empfänger ist auf der zweiten Montagevorrichtung auf der gemeinsamen Drehachse angeordnet. Ein optischer Emitter ist außermittig an der ersten Montagevorrichtung angebracht, und der andere optische Emitter ist außermittig an der zweiten Montagevorrichtung montiert. Der an der ersten Montagevorrichtung montierte optische Sender ist auf den an der zweiten Montagevorrichtung montierten optischen Empfänger gerichtet, und der an der zweiten Montagevorrichtung montierte optische Sender ist auf den an der ersten optischen Vorrichtung montierten optischen Empfänger gerichtet.

Die US 2012/057818 A1 beschreibt eine Vorrichtung, die ein erstes Gehäuse und ein zweites Gehäuse umfasst, das drehbar mit dem ersten Gehäuse gekoppelt ist, wobei das zweite Gehäuse in Bezug auf das erste Gehäuse um eine Drehachse rotiert. Die Vorrichtung umfasst einen optischen Sender, der mit dem ersten Gehäuse gekoppelt ist, wobei der optische Sender so konfiguriert ist, dass er Licht überträgt. Die Vorrichtung umfasst ferner einen Lichtleiter mit einem ersten Lichtleiterende im Wesentlichen an der Drehachse und mit einem zweiten Lichtleiterende, das sich in einem Abstand von der Drehachse befindet, wobei das zweite Lichtleiterende optisch mit dem optischen Sender gekoppelt ist. Die Vorrichtung umfasst zusätzlich einen optischen Empfänger, der mit dem zweiten Gehäuse an der Drehachse gekoppelt ist, wobei der optische Empfänger auch optisch mit dem Lichtleiter an dem ersten Lichtleiterende gekoppelt ist.

Die WO 2016/028226 A1 beschreibt ein optoelektronisches Modul mit einem Transceiver, der Daten optisch übertragen kann. Der Transceiver enthält einen Lichtemitter, um Licht aus dem Modul zu emittieren, und einen Lichtdetektor, um in das Modul eintretendes Licht zu erfassen. Der Lichtdetektor ist in einer rotationssymmetrischen Position in Bezug auf eine zentrale Achse des Moduls angeordnet.

Die US 2011/058817 A1 beschreibt ein System zur bidirektionalen Datenübertragung umfassend ein erstes Array, das mit einem ersten Subsystem verbunden ist, und ein zweites Array, das mit einem zweiten Subsystem verbunden ist. Das erste Array umfasst eine erste Mehrzahl von Sendern, die erste optische Signale erzeugen, die durch den freien Raum übertragen werden, und eine erste Mehrzahl von Empfängern. Die zweite Anordnung umfasst eine zweite Vielzahl von Sendern, die zweite optische Signale erzeugen, die durch den freien Raum zu der ersten Vielzahl von Empfängern übertragen werden, und eine zweite Vielzahl von Empfängern, die zum Empfang der ersten optischen Signale konfiguriert ist. Eine Bilderzeugungsvorrichtung ist funktionsfähig zwischen der ersten und der zweiten Anordnung positioniert und ist so konfiguriert, dass sie gleichzeitig ein Bild der ersten Vielzahl von Sendern auf der zweiten Vielzahl von Empfängern und ein Bild der zweiten Vielzahl von Sendern auf der ersten Vielzahl von Empfängern erzeugt.

Ausgehend von dem oben beschriebenen Stand der Technik liegt der vorliegenden Erfindung die Aufgabe zugrunde, eine verbesserte Sende/Empfangs-Einheit sowie eine verbesserte Vorrichtung umfassend dieselbe bereitzustellen, bei der eine zuverlässige Datenübertragung unabhängig von einer relativen Drehposition bezüglich einer weiteren Sende/Empfangs-Einheit sichergestellt werden kann.

Diese Aufgabe wird durch den Gegenstand der unabhängigen Patentansprüche gelöst, und vorteilhafte Ausgestaltungen sind in den Unteransprüchen definiert.

Erfindungsgemäß wurde erkannt, dass das Problem der Datenunterbrechung bei einer herkömmlichen Signalübertragungsvorrichtung umfassend zwei optische, drahtlose Sende/Empfangs-Einheiten insbesondere dann auftritt, wenn der Abstand d zwischen den zwei Sende/Empfangs-Einheiten oder Transceivern in der Größenordnung der Transceiver-Größe liegt, beispielsweise wenn der Abstand kleiner ist als ein Radius der Sende/Empfangs-Einheiten. Solche kurzen Abmessungen des Abstands d treten beispielsweise bei Anwendungen auf, bei denen eine Datenverbindung zwischen gedruckten Schaltungsplatinen, Printed Circuit Boards (PCBs), bereitgestellt werden sollen, oder beim Einsatz der Vorrichtung aus Fig. 1 als optischer Schleifringersatz an rotierenden Maschinenteilen. Mit anderen Worten führt der geringe Abstand der Sende/Empfangs-Einheiten dazu, dass der von den entsprechenden optischen Sendern ausgestrahlte Sendestrahl nicht ausreichend aufweitet, um auch bei einer Verdrehung der Sende/EmpfangsEinheiten zueinander den entsprechenden Empfänger der gegenüberliegenden Sende/Empfangs-Einheit zu erreichen, so dass die in Fig. 1(b) dargestellte Situation eintritt, die bei einer Drehung der Bauteile, auf denen die entsprechenden Sende/EmpfangsEinheiten 100a, 100b angeordnet sind, relativ zueinander zu Unterbrechungen der Datenübertragung führen kann, dass also keine kontinuierliche Datenverbindung zwischen den zwei Bauteilen über die in Fig. 1 gezeigte konventionelle Vorrichtung sichergestellt ist.

Der vorliegenden Erfindung liegt die Erkenntnis zugrunde, dass die oben diskutierte Problematik in herkömmlichen rotationsfähigen optischen Kurzstrecken-Transceivern für eine optische drahtlose Datenübertragung in der Anordnung des optischen Senders bzw. des optischen Empfängers liegt. Bei Sende/Empfangs-Einheiten, wie sie anhand der Fig. 1 erläutert wurden, umfasst der optische Sender eine Lichtquelle und das Abstrahlprofil des Sendestrahls wird durch eine Sendeoptik geformt. Der optische Empfänger umfasst beispielsweise eine Fotodiode, der wiederum eine eigene Empfangsoptik zugeordnet ist, um den empfangenen Sendestrahl, also das empfangene Lichtsignal, einzusammeln. Diese beiden elementaren Bestandteile des rotationsfähigen, optischen Kurzstrecken-Transceivers sind nebeneinander angeordnet, wie dies anhand der Fig. 1 erläutert wurde, so dass die Drehachse zwischen den beiden Einheiten, nämlich dem Sender und dem Empfänger verläuft. Diese Ausgestaltung führt, wie oben erläutert, dazu, dass bei einem geringen Abstand zwischen den zwei Transceivern, verglichen mit der Größe des Transceivers, eine Rotation der Elemente gegeneinander gar nicht oder nur in einem geringen Umfang möglich ist, da eine zu große Verdrehung bzw. Rotation der zwei Transceiver zueinander zu einer Unterbrechung der Übertragung führt, da sich die Sender und Empfänger in den entsprechenden Transceivern nicht mehr sehen.

Zur Lösung dieser Problematik schlägt die vorliegende Erfindung eine Ausgestaltung einer optischen Sende/Empfangs-Einheit vor, bei der von der konventionellen Anordnung von Sender und Empfänger sowie der konventionellen Bereitstellung separater Empfangs- und Sende-Optiken Abstand genommen wird, und stattdessen ein spezielles Optikdesign bereitgestellt wird, welches die Empfangsoptik und die Sendeoptik miteinander verbindet, wodurch eine Anordnung von optischem Sender und optischem Empfänger ermöglicht wird, die eine zuverlässige Datenübertragung zwischen zwei Sende/EmpfangsEinheiten ermöglicht, unabhängig wie diese zueinander verdreht sind.

Die vorliegende Erfindung schafft eine Optische Sende/Empfangs-Einheit mit einem Träger, der um eine Drehachse drehbar ist, einem optischen Empfänger, der an dem Träger auf der Drehachse angeordnet ist, um ein optisches Empfangssignal aus einer ersten Richtung zu empfangen, einem optischen Sender, der benachbart zu dem optischen Empfänger an dem Träger angeordnet ist, um ein optisches Sendesignal in einer zweiten Richtung auszusenden, und einer Sende/Empfangs-Optik, die an dem Träger auf der Drehachse oberhalb des optischen Empfängers angeordnet ist und sich über den optischen Empfänger und den optischen Sender erstreckt, wobei die Sende/Empfangs-Optik eine Empfangsoptik und eine in der Empfangsoptik angeordnete Sendeoptik umfasst, wobei die Empfangsoptik ausgebildet ist, um das auf die Sende/Empfangs-Optik auftreffende optische Empfangssignal in Richtung des optischen Empfängers auf der Drehachse zu lenken, und wobei die Sendeoptik oberhalb des optischen Senders angeordnet ist und ausgebildet ist, um das von dem optischen Sender ausgesendete optische Sendesignal in einen Ausgangsstrahl zu formen.

Die vorliegende Erfindung schafft ferner eine Vorrichtung zur Signalübertragung, mit zumindest einer ersten optischen Sende/Empfangs-Einheit gemäß einem der vorliegenden Erfindung, und zumindest einer zweiten optischen Sende/Empfangs-Einheit gemäß einem der vorliegenden Erfindung, wobei die erste und die zweite optischen Sende/EmpfangsEinheit derart zueinander angeordnet sind, dass ein Sendestrahl einer Sende/EmpfangsEinheit die Empfängeroptik einer gegenüberliegenden Sende/Empfangs-Einheit beleuchtet.

Ein Vorteil der erfindungsgemäßen Sende/Empfangs-Einheit besteht darin, dass eine kontinuierliche bzw. nicht-unterbrochene Datenverbindung zwischen zwei solchen Sende/Empfangs-Einheiten sichergestellt wird, unabhängig davon, wie die zwei Sende/Empfangs-Einheiten zueinander um die optische Achse verdreht angeordnet sind, so dass die im Zusammenhang mit der Fig. 1 erläuterten Probleme einer Datenübertragungsunterbrechung vermieden werden. Mit anderen Worten stellt die erfindungsgemäße Sende/Empfangs-Einheit sicher, dass bei deren Verwendung in einer Vorrichtung zur optischen Datenübertragung zwischen zwei relativ zueinander drehbaren Bauteilen ein Sichtkontakt zwischen dem optischen Sender in einem der Bauteile und dem optischen Sender in dem anderen der Bauteile unabhängig von einer Verdrehung der jeweiligen Bauteile zueinander sichergestellt ist. Hierdurch werden unerwünschte oder sogar die Sicherheit gefährdende Unterbrechungen der Datenübertragung vermieden. Ferner kann eine Erhöhung der Datenübertragungsrate über eine optische Schnittstelle erreicht werden.

Gemäß Ausführungsbeispielen ist die Sendeoptik in die Empfangsoptik integriert.

Gemäß Ausführungsbeispielen kann die Form der Sendeoptik als sphärische, asphärische oder auch als Freiformfläche ausgeführt sein. Gemäß Ausführungsbeispielen kann die Sendeoptik durch eine an einer oder zwei Oberflächen der Empfangsoptik vorgesehene Oberflächenstruktur gebildet sein, die im Falle einer sphärischen Krümmung der Linse nicht in der Linse enthalten sondern zusätzlich aufgebracht sein kann. Im Falle einer asphärischen oder Freiformlinse kann die Oberflächenstruktur in der mathematischen Beschreibung der Kurve enthalten sein oder aber im Nachgang durch eine Oberflächenschicht aufgetragen werden.

Gemäß Ausführungsbeispielen ist die Sendeoptik zumindest teilweise in der Empfangsoptik angeordnet, wobei ein dem optischen Sender zugewandter Abschnitt der Sendeoptik eine erste Strahlformungsfläche zum Formen des optischen Sendesignals bildet, wobei die erste Strahlformungsfläche
zumindest teilweise in einer dem optischen Empfänger zugewandten Oberfläche der Empfangsoptik gebildet ist, oder
zumindest teilweise über die dem optischen Empfänger zugewandte Oberfläche der Empfangsoptik hervorsteht oder bezüglich dieser zurückgesetzt ist.

Gemäß Ausführungsbeispielen ist die Sendeoptik zumindest teilweise in der Empfangsoptik angeordnet, wobei ein dem optischen Sender abgewandter Abschnitt der Sendeoptik eine erste Strahlformungsfläche zum Formen des optischen Sendesignals bildet, wobei die erste Strahlformungsfläche
zumindest teilweise in einer dem optischen Empfänger abgewandten Oberfläche der Empfangsoptik gebildet ist, oder
zumindest teilweise über die dem optischen Empfänger abgewandte Oberfläche der Empfangsoptik hervorsteht oder bezüglich dieser zurückgesetzt ist.

Gemäß Ausführungsbeispielen ist die Sendeoptik zumindest teilweise in der Empfangsoptik angeordnet, wobei ein dem optischen Sender zugewandter Abschnitt der Sendeoptik eine erste Strahlformungsfläche zum Formen des optischen Sendesignals bildet, wobei die erste Strahlformungsfläche
zumindest teilweise in einer dem optischen Empfänger zugewandten Oberfläche der Empfangsoptik gebildet ist, oder
zumindest teilweise über die dem optischen Empfänger zugewandte Oberfläche der Empfangsoptik hervorsteht oder bezüglich dieser zurückgesetzt ist, und
wobei ein dem optischen Sender abgewandter Abschnitt der Sendeoptik eine zweite Strahlformungsfläche zum Formen des optischen Sendesignals bildet, wobei die zweite Strahlformungsfläche
zumindest teilweise in einer dem optischen Empfänger abgewandten Oberfläche der Empfangsoptik gebildet ist, oder
zumindest teilweise über die dem optischen Empfänger abgewandte Oberfläche der Empfangsoptik hervorsteht oder bezüglich dieser zurückgesetzt ist.

Gemäß Ausführungsbeispielen ist die dem optischen Empfänger zugewandte Oberfläche der Empfangsoptik durch den dem optischen Sender zugewandten Abschnitt der Sendeoptik in zwei Abschnitte unterteilt, so dass die dem optischen Empfänger abgewandte Oberfläche der Empfangsoptik und die zwei Abschnitte der dem optischen Empfänger zugewandte Oberfläche der Empfangsoptik das auf die Empfangsoptik auftreffende optische Empfangssignal in Richtung des optischen Empfängers auf der Drehachse lenken.

Gemäß Ausführungsbeispielen weist die dem optischen Empfänger zugewandte Oberfläche und/oder die dem optischen Empfänger abgewandte Oberfläche der Empfangsoptik eine bestimmte Oberflächenstruktur auf, so dass aufgrund der in der Empfangsoptik angeordneten Sendeoptik nicht ausgeleuchtete Bereiche zwischen der Empfangsoptik und dem Träger ausgeleuchtet werden.

Gemäß Ausführungsbeispielen ist die dem optischen Empfänger zugewandte Oberfläche und/oder die dem optischen Empfänger abgewandte Oberfläche der Empfangsoptik mit einer Schicht mit einer bestimmten Oberflächenstruktur versehen, so dass aufgrund der in der Empfangsoptik angeordneten Sendeoptik nicht ausgeleuchtete Bereiche zwischen der Empfangsoptik und dem Träger ausleuchtet werden.

Gemäß Ausführungsbeispielen weist die bestimmte Oberflächenstruktur eine vorbestimmte Oberflächenrauigkeit oder eine vorbestimmte sich wiederholende Struktur auf.

Gemäß Ausführungsbeispielen sind Abschnitte der Empfangsoptik, an denen eine Strahlformungsfläche angeordnet ist, ohne Oberflächenstruktur ausgebildet.

Gemäß Ausführungsbeispielen hat der Träger eine Trägeroberfläche, von der sich die Drehachse senkrecht erstreckt.

Gemäß Ausführungsbeispielen sind der optische Empfänger und der optische Sender auf der Trägeroberfläche angeordnet, oder der optische Empfänger und der optische Sender an der Trägeroberfläche sind mit gleichen oder unterschiedlichen Abständen von der Trägeroberfläche angeordnet.

Gemäß Ausführungsbeispielen umfasst die optische Sende/Empfangs-Einheit zumindest einen weiteren optischen Sender, der benachbart zu dem optischen Empfänger an dem Träger angeordnet ist, wobei die Sende/Empfangs-Optik zumindest eine weitere Sendeoptik aufweist, die in der Empfangsoptik angeordnet oder integriert ist, wobei die weitere Sendeoptik einen Teil der Empfangsoptik überdeckt.

Gemäß Ausführungsbeispielen umfasst der optische Empfänger eine Photodiode, PD, , und der optische Sender umfasst eine Laserquelle, wie z.B. eine Laserdiode, LD, oder eine inkohärente Lichtquelle, wie z.B. eine Licht emittierende Diode, LED.

Gemäß Ausführungsbeispielen liegt eine Wellenlänge des optischen Empfangssignals und des optischen Sendesignals im ultravioletten Bereich, im sichtbaren Bereich oder im Infrarotbereich.

Gemäß Ausführungsbeispielen ist die Vorrichtung für eine bidirektionale Übertragung in beiden Richtungen oder für eine unidirektionale Übertragung in nur einer Richtung ausgelegt.

Gemäß Ausführungsbeispielen bilden die Drehachsen der ersten und der zweite optischen Sende/Empfangs-Einheit eine gemeinsame Achse, oder die Drehachsen der ersten und zweiten optischen Sende/Empfangs-Einheit haben einen bestimmten Versatz.

Gemäß Ausführungsbeispielen sind die erste und die zweite optische Sende/EmpfangsEinheit mit einem Abstand zueinander angeordnet, wobei der Abstand kleiner ist als ein Durchmesser der Sende/Empfangs-Einheiten. Ausführungsbeispiele ermöglichen eine Anordnung von Sende/Empfangs-Einheiten in einem so geringen Abstand. Bei anderen Ausführungsbeispielen können die Sende-/Empfangseinheit in einem größeren Abstand angeordnet sein, beispielsweise einem Abstand der dem ein- bis zehn-fachen Durchmesser der Sende/Empfangseinheiten entspricht.

Bevorzugte Ausführungsformen der vorliegenden Anmeldung werden nachfolgend unter Bezugnahme auf die beiliegenden Zeichnungen näher erläutert. Es zeigen:
- Fig. 1: zeigt eine schematische Darstellung einer herkömmlichen Signalübertragungsvorrichtung umfassend zwei optische, drahtlose Sende/EmpfangsEinheiten, wobei Fig. 1(a) eine Stellung der zwei optischen Sende/EmpfangsEinheiten mit einer intakten Datenverbindung bzw. einem intakten Datenlink zwischen denselben darstellt, und wobei Fig. 1(b) die zwei Sende/EmpfangsEinheiten verdreht zueinander darstellt, so dass die Datenverbindung unterbrochen ist;
- Fig. 2: zeigt den Aufbau einer Sende/Empfangs-Einheit gemäß einem Ausführungsbeispiel der vorliegenden Erfindung;
- Fig. 3: zeigt anhand der Fig. 3(a) bis Fig. 3(g) verschiedene Ausführungsformen für die Sende/Empfangs-Optik;
- Fig. 4: zeigt Ausführungsbeispiele für die Ausgestaltung der Sende/Empfangs-Einheit in Draufsicht, wobei Fig. 4(a) eine runde bzw. kreisförmige Ausgestaltung der Sende/Empfangs-Einheit 200 und Fig. 4(b) eine rechteckige oder quadratische Ausgestaltung der Sende/Empfangs-Einheit 200 darstellt;
- Fig. 5: zeigt anhand der Fig. 5(a) und Fig. 5(b) verschiedene Ausführungsformen für die Anordnung von optischem Sender/Empfänger auf einem Träger der Sende/Empfangs-Optik;
- Fig. 6: zeigt ein Ausführungsbeispiel für eine Signalübertragungseinrichtung, welche zwei zueinander drehbar angeordnete Bauteile aufweist, die jeweils mit einer erfindungsgemäß ausgestalteten Sende/Empfangs-Einheit versehen sind;
- Fig. 7: zeigt ein Ausführungsbeispiel ähnlich zu Fig. 6, wobei die Sende/EmpfangsEinheiten mit einem Versatz und einer Verkippung zueinander angeordnet sind; und
- Fig. 8: zeigt ein Ausführungsbeispiel der erfindungsgemäßen Sende/EmpfangsEinheit, bei der die Sende/Empfangs-Optik an einer Oberfläche eine Oberflächenstruktur aufweist.

In der nachfolgenden Beschreibung der Ausführungsbeispiele der vorliegenden Erfindung werden in den Figuren gleichwirkende oder gleiche Elemente mit den gleichen Bezugszeichen versehen.

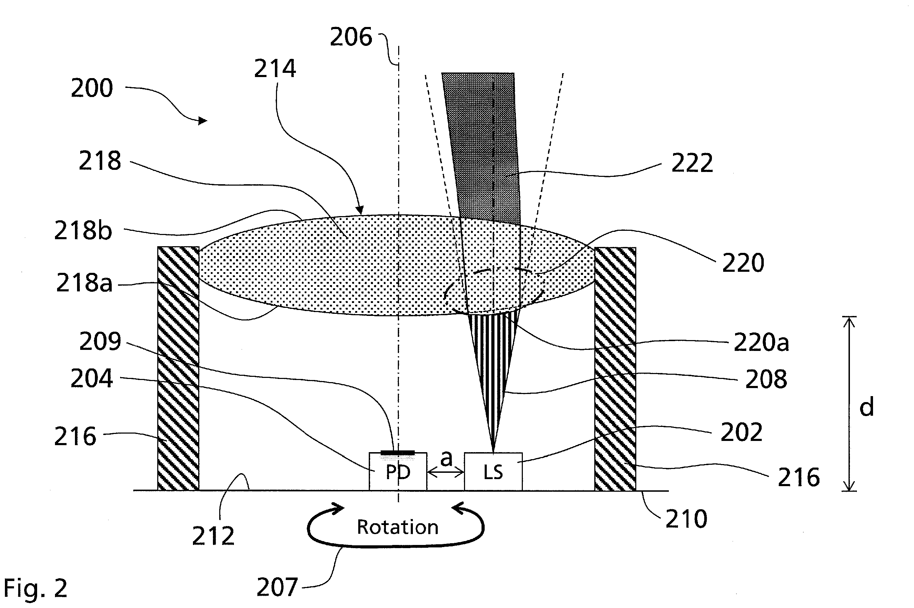

Fig. 2 zeigt den Aufbau einer Sende/Empfangs-Einheit gemäß einem Ausführungsbeispiel der vorliegenden Erfindung. Die Sende/Empfangs-Einheit 200 umfasst einen optischen Sender 202 und einen optischen Empfänger 204. Die Sende/Empfangs-Einheit 200 ist um die Drehachse 206 drehbar angeordnet, wie durch den Pfeil 207 angedeutet ist. In Fig. 2 ist ferner der Sendestrahl 208 dargestellt, der von dem optischen Sender 202 bereitgestellt wird. Der optische Empfänger 204 ist so angeordnet, dass dessen Position mit einer Position der Drehachse 206 übereinstimmt. Der optische Empfänger 204 empfängt ein optisches Empfangssignal aus einer ersten Richtung, und der optische Sender 202 sendet ein optisches Sendesignal in eine zweite Richtung, die der ersten Richtung im Wesentlichen entgegengesetzt ist. Bei dem dargestellten Ausführungsbeispiel umfasst der optische Empfänger 204, der beispielsweise durch eine Fotodiode, PD, gebildet sein kann, eine aktive Fläche 209 zum Empfang von einfallendem Licht. Der Empfänger 204 ist derart im Bereich der Drehachse 206 angeordnet, dass die Drehachse 206 mittig auf der aktiven Fläche 209 und senkrecht zu derselben steht. Bei dem dargestellten Ausführungsbeispiel umfasst die Sende/Empfangs-Einheit bzw. der Transceiver 200 ferner einen Träger 210, und auf einer Oberfläche 212 des Trägers sind bei dem dargestellten Ausführungsbeispiel sowohl der optische Sender 202 als auch der optische Empfänger 204 angeordnet. Der optische Sender 202 ist versetzt zu der Drehachse 206 und beabstandet von dem optischen Empfänger 204 angeordnet. Mit anderen Worten ist der optische Empfänger 204 bezogen auf die Drehachse 206 mittig auf dem Träger 210 angeordnet, und der optische Sender 206 ist außermittig bzw. exzentrisch bezogen auf die Drehachse 206 auf dem Träger 210 angeordnet. Der Abstand a zwischen dem optischen Empfänger 204 und optischen Sender 202 kann gemäß Ausführungsbeispielen vom Systementwurf abhängen.

Die Sende/Empfangs-Einheit 200 umfasst ferner eine Sende/Empfangs-Optik 214, die beabstandet von der Trägeroberfläche 212 und damit beabstandet von dem optischen Sender 202 und dem optischen Empfänger 204 angeordnet ist. Die Sende/EmpfangsEinheit 200 umfasst eine Trägerstruktur 216 zur Befestigung/Montage der Sende/Empfangs-Optik 214. Die Trägerstruktur 216 ist auf der Trägeroberfläche 212 des Trägers 210 angeordnet und erstreckt sich, wie in Fig. 2 dargestellt ist, nach oben, so dass die Sende/Empfangs-Optik beabstandet von der Trägeroberfläche 212 angeordnet ist.

Gemäß Ausführungsbeispiel ist die Sende/Empfangs-Optik mit einem Abstand d von der Oberfläche 212 des Trägers 210 angeordnet, der im Bereich vom Radius der Optik 214 bis zum Durchmesser der Optik 214 liegen kann. Der Abstand d ist, wie in Fig. 2 dargestellt ist, entlang der Drehachse 208 von der Trägeroberfläche 212 bis zur Optik 214 gemessen.

Erfindungsgemäß umfasst die Sende/Empfangs-Optik 214 eine Empfangsoptik 218 und eine Sendeoptik 220, wobei die Sendeoptik 220 in der Empfangsoptik 218 angeordnet ist, wie dies in Fig. 2 dargestellt ist. Mit anderen Worten ist die Sende/Empfangs-Optik primär durch die Empfangsoptik 218 gebildet, die auf der Drehachse 206 angeordnet ist und sich sowohl über den optischen Empfänger 204 als auch über den optischen Sender 202 erstreckt, wobei im Bereich oberhalb des optischen Senders 202 die Sendeoptik 220 angeordnet ist. Die Sendeoptik 220 kann beispielsweise in die Empfangsoptik 218 integriert sein. Bei dem in Fig. 2 dargestellten Ausführungsbeispiel ist die Sendeoptik 220 derart in die Empfangsoptik 218 integriert, das eine Sendestrahlformungsfläche 220a, die dem optischen Sender 202 zugewandt ist, über eine erste, dem optischen Empfänger 204 zugewandte Oberfläche 218a der Empfangsoptik 218 hervorsteht. Die Sendeoptik 220 ist derart in die Empfangsoptik 218 integriert, dass mit Ausnahme der Strahlformungsfläche 220a die verbleibenden Abschnitte der Sendeoptik 220 innerhalb der Empfangsoptik 218 angeordnet sind, sich also nicht über eine zweite, dem optischen Empfänger 204 abgewandte Oberfläche 218b der Empfangsoptik 218 hinaus erstrecken.

Erfindungsgemäß ist somit vorgesehen, die Empfangsoptik 218 und die Sendeoptik 220 so miteinander zu integrieren, dass eine gemeinsame oder einzige Sende/EmpfangsOptik oder Transceiver-Optik 214 entsteht, wobei die Empfangsoptik 218 den größten Teil der Sende/Empfangs-Optik 214 ausmacht. Wie nachfolgend noch näher erläutert wird, erlaubt die erfindungsgemäße Ausgestaltung der Sende/Empfangs-Einheit die Bereitstellung einer Datenübertragungsvorrichtung zur Datenübertragung von zueinander drehbaren Bauteilen mit einer Rotationsfähigkeit für eine 360°-Grad-Rotation auch bei sehr kurzen Abständen. Hierdurch ist eine zuverlässige und kontinuierliche Datenübertragung sichergestellt, und die bei herkömmlichen Ausgestaltungen von Sende/EmpfangsEinheiten angetroffenen Probleme, wie sie oben erläutert wurden, werden vermieden. Erfindungsgemäß ist vorgesehen, dass das elektrische Empfängerelement bzw. der optische Empfänger 204, der beispielsweise eine Fotodiode umfasst, auf der Drehachse 206 sitzt, und die Empfangsoptik 218 sitzt ebenfalls auf der Drehachse 206 über der Fotodiode 204, wie dies in Fig. 2 dargestellt ist. Die Lichtquelle bzw. der optische Sender 202 befindet sich außermittig, also beabstandet von der Drehachse 206, benachbart zu der Fotodiode 204, also in unmittelbarer Nähe zu derselben. Der optische Sender 202 kann eine Laserquelle, wie z. B. eine Laserdiode, LD, oder eine inkohärente Lichtquelle, wie z.B. eine lichtemittierende Diode, LED, umfassen.

Die durch die Sende/Empfangs-Einheit verarbeiteten Lichtsignale können eine Wellenlänge im ultravioletten Bereich, im sichtbaren Bereich oder im Infrarotbereich haben.

Die Sendeoptik 220 sitzt, wie in Fig. 2 dargestellt ist, oberhalb der Lichtquelle 202 und formt den Sendestrahl 208, um einen Ausgangsstrahl 222 zu erhalten bzw. zu formen, der in eine vorbestimmte Richtung gerichtet ist, beispielsweise auf einen gegenüberliegenden Transceiver in einer Signalübertragungsvorrichtung, wie dies nachfolgend erläutert wird. Die Sendeoptik 220 ist derart angeordnet, dass diese die Empfangsoptik 218 an der Position, an der die Sendeoptik 220 angeordnet ist, überdeckt, wobei bei dem in Fig. 2 dargestellten Ausführungsbeispiel nur der über die Oberfläche 218a der Empfangsoptik 218 hervorstehende Teil 220a der Sendeoptik 220 für die Strahlformung genutzt wird.

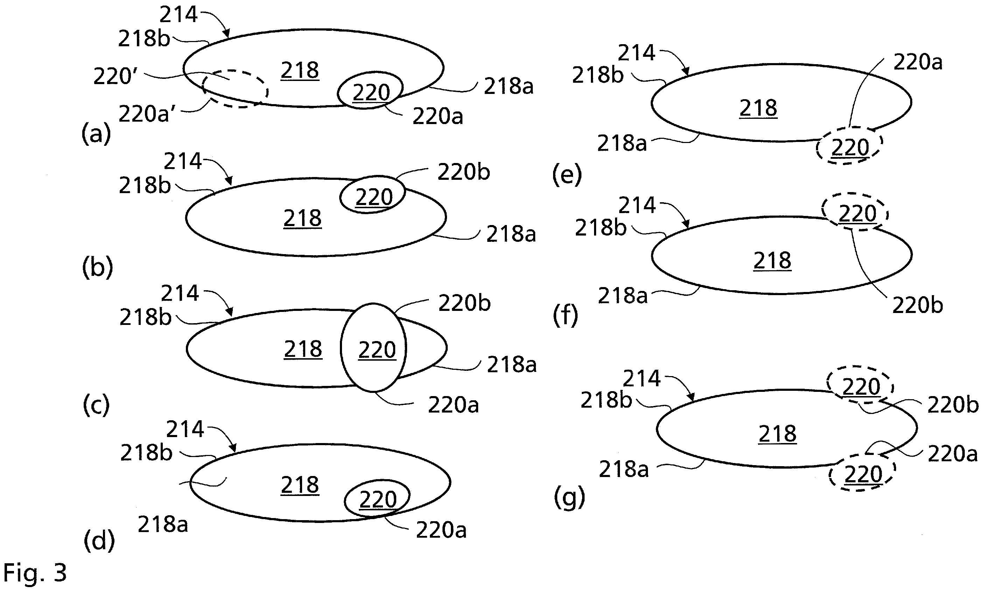

Die vorliegende Erfindung ist allerdings nicht auf die Ausgestaltung der Sende/EmpfangsOptik 214 gemäß dem in Fig. 2 dargestellten Ausführungsbeispiel beschränkt, vielmehr kann die Sende/Empfangs-Optik auch anders ausgestaltet sein. Fig. 3(a) bis Fig. 3(g) zeigen verschiedene Ausführungsformen für die Sende/Empfangs-Optik 214.

Fig. 3(a) zeigt die Ausgestaltung der Sende/Empfangs-Optik 214, wie sie anhand der Fig. 2 erläutert wurde, gemäß der die Sendeoptik 220 derart in die Empfangsoptik 218 integriert ist, dass nur die Strahlformungsoberfläche 220a der Sendeoptik 220 über die untere Oberfläche der Empfangsoptik 218 hervorsteht, und für die Strahlformung des Sendestrahls 208 zur Erzeugung des Ausgangsstrahls 222 bereitsteht.

Gemäß Fig. 3(b) kann bei anderen Ausführungsbeispielen die Sendeoptik 220 derart in die Empfangsoptik 218 integriert sein, dass eine Strahlformungsfläche 220b der Sendeoptik 220 über die zweite Oberfläche 218b der Empfangsoptik vorsteht, und zur Strahlformung des Sendestrahls 208 zur Erzeugung des Ausgangsstrahls 222 zur Verfügung steht. Bei den in Fig. 3(a) und Fig. 3(b) dargestellten Ausführungsbeispielen wird somit die erste bzw. zweite Oberfläche 218a, 218b der Empfangsoptik 218 durch die vorstehende Strahlformungsfläche 220a, 220b der Sendeoptik 220 unterteilt.

Gemäß einem weiteren Ausführungsbeispiel, welches anhand der Fig. 3(c) dargestellt ist, können auch beide Oberflächen 218a, 218b der Empfangsoptik 218 durch die Sendeoptik 220 unterteilt werden, die bei dem dargestellten Ausführungsbeispiel derart in die Empfangsoptik 218 integriert ist, dass eine erste, dem optischen Sender 202 zugewandte Strahlformungsfläche 220a über die erste Oberfläche 218a der Empfangsoptik 218 hervorsteht, und ferner eine zweite, dem optischen Sender 202 abgewandte Strahlformungsfläche 220b vorgesehen ist, die über die zweite Oberfläche 218b der Empfangsoptik 218 vorsteht.

Gemäß den in den Fig. 3(a) bis 3(c) gezeigten Ausführungsbeispielen stehen eine oder mehrere Strahlformungsoberflächen der Sendeoptik über Oberflächen der Empfangsoptik vor. Bei anderen Ausführungsbeispielen sind eine oder mehrere Strahlformungsoberflächen der Sendeoptik bezüglich Oberflächen der Empfangsoptik zurückgesetzt bzw. subtrahiert.

Bei dem in Fig. 3(e) gezeigten Ausführungsbeispiel ist die Strahlformungsoberfläche 220a der Sendeoptik 220 gegenüber der Oberfläche 218a zurückgesetzt. Bei dem in Fig. 3(f) gezeigten Ausführungsbeispiel ist die Strahlformungsoberfläche 220b der Sendeoptik 220 gegenüber der Oberfläche 218b zurückgesetzt. Bei dem in Fig. 3(g) gezeigten Ausführungsbeispiel ist die Strahlformungsoberfläche 220a der Sendeoptik 220 gegenüber der Oberfläche 218a zurückgesetzt und die Strahlformungsoberfläche 220b der Sendeoptik 220 ist gegenüber der Oberfläche 218b zurückgesetzt.

Gemäß wiederum weiteren Ausführungsbeispielen ist es nicht erforderlich, dass die Strahlformungsflächen 220a, 220b der Sendeoptik 220 über die entsprechenden Oberflächen 218a, 218b der Empfangsoptik 218 hervorstehen bzw. gegenüber denselben zurückgesetzt sind, vielmehr können die Strahlformungsflächen 220a, 220b, die auch als untere bzw. obere aktive Sendeflächen bezeichnet werden können, in den Oberflächen 218a, 218b enthalten sein, wie dies anhand der Fig. 3(d) dargestellt ist.

Erfindungsgemäß ist somit zumindest eine der Strahlformungsflächen, gemäß Ausführungsbeispielen auch beide Strahlformungsflächen der Sendeoptik 220 zur Strahlformung des Sendestrahls vorhanden, wobei im Hinblick auf die Fig. 3(d) angemerkt wird, dass natürlich auch die Strahlformungsfläche 220b in der Oberfläche 218b der Empfangsoptik 218 enthalten sein kann.

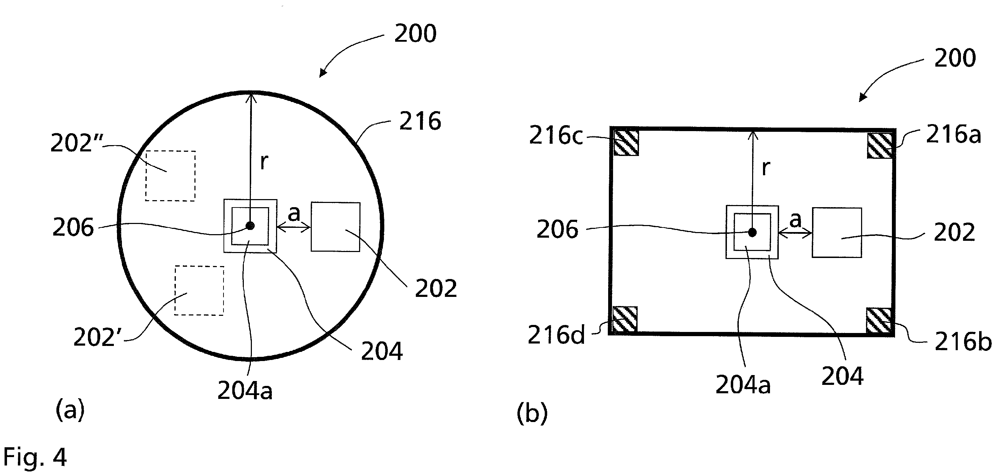

Die in Fig. 2 dargestellte Sende/Empfangs-Einheit 200 kann in Draufsicht unterschiedliche Formen aufweisen. Fig. 4 zeigt zwei Ausführungsbeispiele für die Ausgestaltung der Sende/Empfangs-Einheit in Draufsicht, wobei Fig. 4(a) eine runde bzw. kreisförmige Ausgestaltung der Sende/Empfangs-Einheit 200 und Fig. 4(b) eine rechteckige oder quadratische Ausgestaltung der Sende/Empfangs-Einheit 200 darstellt. Für einen Fachmann ist offensichtlich, dass die Sende/Empfangs-Einheit 200 eine beliebige, z.B. vieleckige, Form haben kann.

Fig. 4(a) zeigt eine kreisförmige Sende/Empfangs-Einheit 200, mit einem Radius r, der von der Drehachse 206 bis zur kreisförmig ausgestalteten Halterung 216 für die Sende/Empfangs-Optik 214, nicht dargestellt, gemessen ist. In Fig. 4(a) ist ferner ein weiteres Ausführungsbeispiel angedeutet, gemäß dem eine oder mehrere zusätzliche optische Sender 202', 202" im gleichen oder mit einem anderen Abstand zur optischen Empfangseinrichtung 204 vorgesehen sein können. Bei dem in Fig. 4(a) dargestellten Ausführungsbeispiel ist die Halterung 216 umlaufend dargestellt, kann aber auch durch einzelne Stützen oder Ähnliches zur Halterung der Sende/Empfangs-Optik 214 ausgebildet sein.

Sofern gemäß Ausführungsbeispielen ein oder mehrere zusätzliche optische Sender 202', 202" vorgesehen sind, umfasst die erfindungsgemäß ausgestaltete Sende/EmpfangsOptik 214 zusätzliche Sendeoptiken 220' mit zusätzlichen Strahlformungsflächen 220a', die in die Empfangsoptik 218 integriert sind, wie dies beispielhaft in der Fig. 3(a) dargestellt ist. Die zusätzliche Sendeoptik 220' ist oberhalb des optischen Senders 220' angeordnet und stellt die Strahlformungsfläche 220a' zur Strahlformung des Sendestrahls bereit, der durch die zusätzliche optische Sendeeinheit 202' bereitgestellt wird. Die zusätzliche Sendeoptik 220' kann gemäß anderen Ausführungsbeispielen ähnlich ausgestaltet sein wie die Sendeoptik 220, also in Form der in Fig. 3(b) bis Fig. (d) dargestellten Ausführungsbeispiele.

Fig. 4(b) zeigt eine rechteckige Ausgestaltung der Sende/Empfangs-Einheit 200, wobei der Abstand von der Drehachse 206 zum Rand der Einheit 200 als Radius r bezeichnet wird. Bei diesem Ausführungsbeispiel umfasst die Halterung 216 zum Tragen der Sende/Empfangs-Optik 214 vier, an den Ecken angeordnete Stützen 216a bis 216d, die bei anderen Ausführungsbeispielen natürlich auch anders angeordnet sein können.

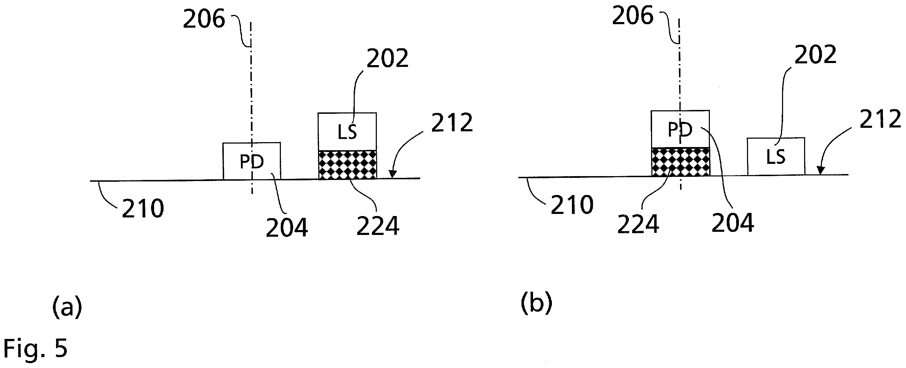

Bei dem anhand der Fig. 2 dargestellten Ausführungsbeispiel sind der optische Sender 202 und der optische Empfänger 204 beide auf der Oberfläche 212 des Trägers 210 angeordnet. Die vorliegende Anmeldung ist jedoch nicht auf eine solche Anordnung beschränkt, vielmehr können die Elemente 202, 204 mit gleichen oder unterschiedlichen Abständen zur Oberfläche 212 angeordnet sein. Fig. 5 zeigt mögliche Ausführungsformen für eine solche Ausgestaltung, wobei Fig. 5(a) eine Ausgestaltung darstellt, bei der der optische Sender 202 mittels eines geeigneten Abstandselements 224 beabstandet von der Trägeroberfläche 212 angeordnet ist, wohingegen sich der optische Empfänger 204 auf der Trägeroberfläche 212 befindet. Fig. 5(b) zeigt ein anderes Ausführungsbeispiel, bei dem der optische Empfänger 204 unter Verwendung eines geeigneten Abstandshalters 224 beabstandet von der Oberfläche 212 des Trägers 210 angeordnet ist, wohingegen der optische Sender 202 auf der Oberfläche 212 angeordnet ist. Bei wiederum anderen Ausführungsbeispielen kann, wie erwähnt, sowohl der optische Sender 202 als auch der optische Empfänger 204 mit einem geeigneten Abstandshalter 224 beabstandet von der Oberfläche des Trägers angeordnet sein, wobei die Abstände für den optischen Sender und für den optischen Empfänger gleich oder unterschiedlich sein können.

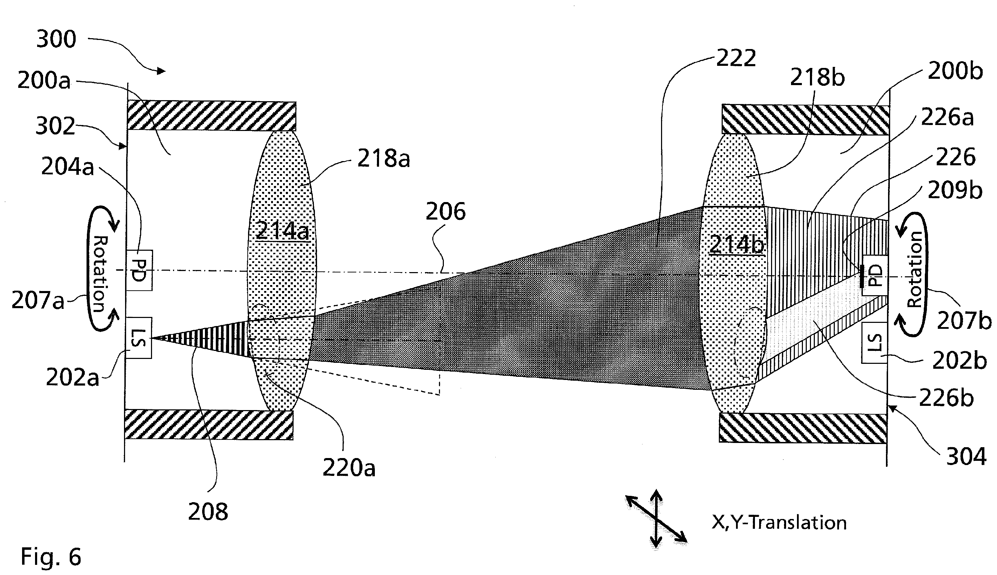

Nachfolgend werden Ausführungsbeispiele für eine Signalübertragungseinrichtung unter Verwendung der erfindungsgemäßen Sende/Empfangs-Einheiten, wie sie beispielsweise anhand der Fig. 2 bis 5 erläutert wurden, näher beschrieben. Fig. 6 zeigt ein Ausführungsbeispiel für eine Signalübertragungseinrichtung 300, welche zwei zueinander drehbar angeordnete Bauteile 302, 304 aufweist, die jeweils mit einer erfindungsgemäß ausgestalteten Sende/Empfangs-Einheit 200a bzw. 200b versehen sind, um eine drahtlose, optische Datenübertragung zwischen den zwei zueinander drehbar angeordneten Bauteilen 302, 304 zu ermöglichen. In Fig. 6 sind die anhand der Fig. 2 beschriebenen Elemente der Sende/Empfangs-Einheit 200a dargestellt, und die Bezugszeichen sind mit dem Zusatz "a" versehen und werden nicht erneut beschrieben. Ebenso ist die Sende/EmpfangsEinheit 200b, die dem zweiten Bauteil 304 zugeordnet ist, dargestellt und die entsprechenden, anhand der Fig. 2 beschriebenen Bauteile sind mit den gleichen Bezugszeichen mit dem Zusatz "b" versehen und werden ebenfalls nicht erneut beschrieben.

Fig. 6 zeigt beispielhaft eine Datenübertragung vom ersten Bauteil 302 zu dem zweiten Bauteil 304, also eine unidirektionale Verbindung bzw. einen unidirektionaler Link, wobei gemäß anderen Ausführungsbeispielen eine gleichzeitige Übertragung in beiden Richtungen ebenfalls möglich ist. Wie in Fig. 6 dargestellt ist, ist die Sendeoptik 220a der sendenden Sende/Empfangs-Einheit 200a ausgestaltet, um den Sendestrahl 208 in den Ausgangsstrahl 222 derart zu formen, dass der Ausgangsstrahl 222 auf die Sende/EmpfangsOptik 214b der empfangenen Sende/Empfangs-Einheit 200b gerichtet ist bzw. diese Sende/Empfangs-Optik beleuchtet. Gemäß Ausführungsbeispielen kann die empfangene Sende/Empfangs-Einheit 200b, die auch als Empfangstransceiver bezeichnet werden kann, von der optischen Z-Achse, mit der die Drehachse 206 zusammenfällt, in X-Richtung und/oder Y-Richtung verschoben sein, wobei der Grad der Verschiebbarkeit vom genauen Entwurf der Sende- und Empfangsoptik abhängt. Gemäß Ausführungsbeispielen kann der Versatz zwischen 0 und größer als ein Radius der Sende/EmpfangsOptik sein.

Der vom Sendetransceiver bzw. von der sendenden Sende/Empfangs-Einheit 200a bereitgestellte und auf die Empfangsoptik 218b gerichtete Sendestrahl 222 wird von der Transceiver-Optik 214b des Empfangstransceivers 200b eingesammelt und durch die erste und zweite Empfangsfläche in Richtung der Fotodiode 204b gelenkt. Fig. 6 zeigt den von der Sende/Empfangs-Optik 214b erzeugten Empfangsstrahl 226, der bei dem in Fig. 6 gezeigten Ausführungsbeispiel aufgrund der Anordnung der Sendeoptik 220b innerhalb der Empfangsoptik 218b einen ersten Abschnitt 226a aufweist, der zumindest teilweise auf die aktive Fläche 209b der Fotodiode 204b auftrifft, und der ferner einen ausgesparten bzw. nicht-beleuchteten Bereich 226b aufweist, der sich aufgrund der Anordnung/Integration der Sendeoptik 220 innerhalb der Empfangsoptik einstellt. Mit anderen Worten besitzt der von der Empfangsoptik 218 auf die Fotodiodenebene abgebildete Lichtfleck an der Stelle der Sendeoptik bzw. der Sendelinse die Lücke 226b, was in Situationen unkritisch ist, in denen diese Lücke außerhalb des Bereichs der aktiven Fläche 209 der Fotodiode 204 liegt, so dass die Lücke eine Datenübertragung nicht beeinträchtigt.

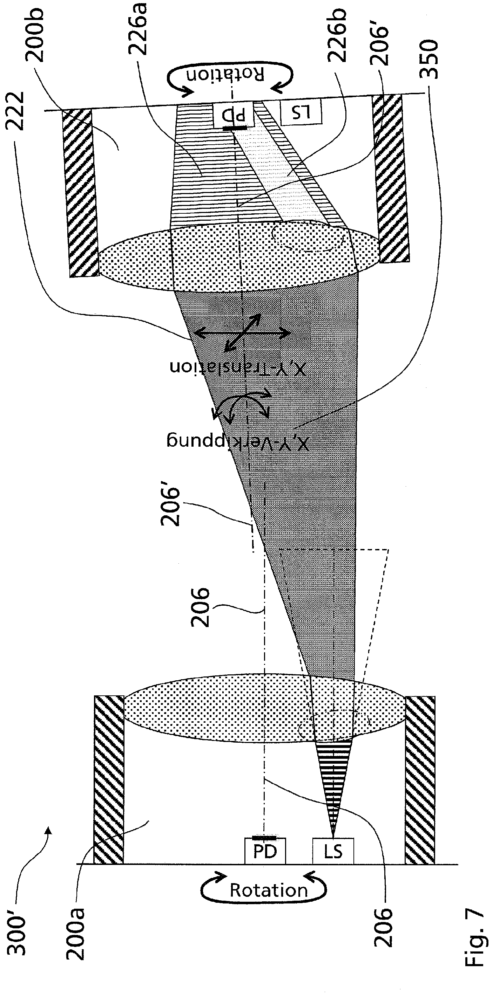

In Fig. 6 ist eine Anordnung der zwei Sende/Empfangs-Einheiten 200a bzw. 200b dargestellt, die derart ist, dass beide Einheiten auf der gleichen optischen Achse liegen, nämlich der in Fig. 6 dargestellten gemeinsamen optischen Achse oder gemeinsamen Drehachse 206. Die vorliegende Erfindung ist allerdings nicht auf solche Ausgestaltungen beschränkt. Jeder Transceiver hat seine eigene Drehachse. Diese Drehachsen können (siehe Fig. 6), sind aber typischerweise nicht identisch. Die beiden Drehachsen können, in einem gewissen Rahmen; gegeneinander verschoben oder auch verkippt sein, so dass gemäß weiteren Ausführungsbeispielen die Sende/Empfangs-Einheiten 200a, 200b zueinander versetzt sind, so dass diese keine gemeinsame optische Achse bzw. gemeinsame Drehachse aufweisen. Fig. 7 zeigt eine Ausgestaltung ähnlich zu der in Fig. 6, wobei gleiche Elemente mit den gleichen Bezugszeichen versehen sind und nicht erneut beschrieben werden. Bei dem in Fig. 7 gezeigten Ausführungsbeispiel sind die Sende/EmpfangsEinheiten 200a, 200b mit einem Versatz zueinander angeordnet, wie dies durch das Bezugszeichen 350 angedeutet ist, beispielsweise ist die zweite Sende/Empfangs-Einheit 200b in X- und Y-Richtung verkippt angeordnet, so dass die optischen Achsen bzw. Drehachsen 206, 206' der zwei Einheiten nicht mehr übereinstimmen, und einen entsprechenden Versatz aufweisen. Die optische Achse bzw. Drehachse 206 der ersten Sende/Empfangs-Einheit 200a ist bezüglich der optischen Achse bzw. Drehachse 206' der zweiten Sende/Empfangs-Einheit 200b versetzt, wie aus Fig. 7 ersichtlich ist.

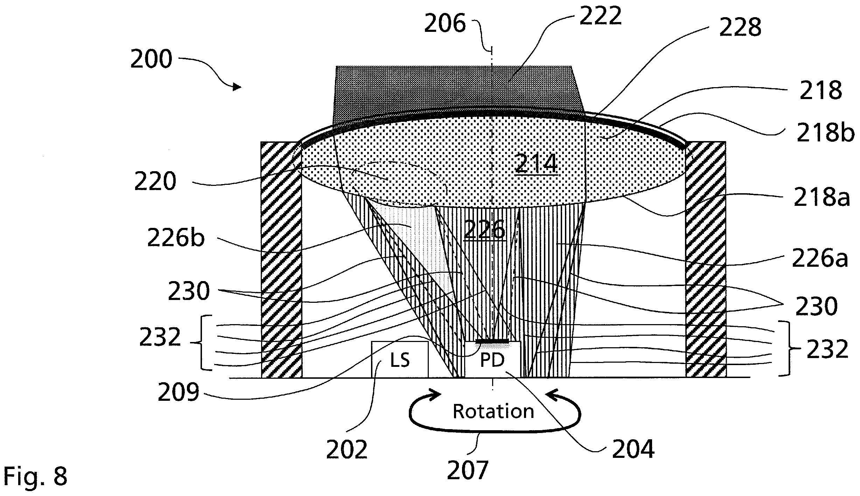

Abhängig von der Anordnung der Elemente zueinander, beispielsweise abhängig von einer Verkippung oder einem Versatz können Situationen auftreten, in denen der nichtbeleuchtete Abschnitt 226b in dem Bereich der aktiven Fläche der Fotodiode wandert, was zu einer Unterbrechung der Datenverbindung führen würde. Um eine solche Situation zu vermeiden, kann gemäß Ausführungsbeispielen vorgesehen sein, eine zusätzliche Oberflächenstruktur bereitzustellen, wie dies nachfolgend anhand der Fig. 8 erläutert wird.

Gemäß Ausführungsbeispielen kann vorgesehen sein, die oben erwähnte Lücke 226b zu vermeiden bzw. zu schließen, um so eine Unterbrechung eine Datenübertragung in Situationen zu vermeiden, in denen sich beispielsweise aufgrund einer Verdrehung oder eins Versatzes (Fig. 7) der Bauteile 302, 304 die Lücke in dem Bereich der aktiven Fläche der Fotodiode befindet. Zur Vermeidung bzw. zur Schließung der genannten Lücke ist gemäß Ausführungsbeispielen vorgesehen, die Sende/Empfangs-Optik mit einer vorbestimmten Oberflächenstruktur zu versehen, um beispielsweise die ideale Strahlabbildung gezielt zu verändern, so dass die fokussierten Strahlen auch gezielt an die Stellen in der Lücke gelenkt werden. Hierdurch wird die Ausleuchtung durch den Empfangsstrahl geglättet und die mögliche Übertragungslücke geschlossen. Gleichzeitig kann mittels der Oberflächenstruktur jede andere vorteilhafte Ausleuchtung bereitgestellt werden. Fig. 8 zeigt ein Ausführungsbeispiel der erfindungsgemäßen Sende/Empfangs-Einheit 200, bei der die Sende/Empfangs-Optik 214 an der zweiten Oberfläche, der dem Empfänger abgewandten Oberfläche 218b die gerade erwähnte Oberflächenstruktur aufweist, die in Fig. 8 schematisch mit dem Bezugszeichen 228 bezeichnet ist. Gemäß weiteren Ausführungsbeispielen kann vorgesehen sein, die Struktur 228 an der dem Empfänger zugewandten Oberfläche 218a anzuordnen, und gemäß wiederum weiteren Ausführungsbeispielen ist vorgesehen, die Struktur 228 an beiden Oberflächen 218a, 218b vorzusehen. An dieser Stelle wird jedoch darauf hingewiesen, dass die Struktur 228 derart an den Oberflächen 218a, 218b angeordnet ist, dass der Bereich, in dem die Sendeoptik 220 gebildet ist, bzw. die Bereiche der Strahlformungsflächen 220a, 220b der Sendeoptik 220 nicht mit der Oberflächenstruktur 228 versehen sind. Gemäß Ausführungsbeispielen ist die Struktur 228 entweder durch eine Bearbeitung der entsprechenden Oberflächen 218a bzw. 218b bereitgestellt oder die Sende/Empfangs-Optik ist an den Oberflächen 218a, 218b mit einer zusätzlichen Schicht versehen oder beschichtet, die die entsprechende Oberflächenstruktur bereitstellt, wobei die Beschichtung derart ist, dass, wie erwähnt, Bereiche der Sendeoptik, welche die Strahlformungsfläche 220a, 220b definieren, ausgespart sind.

In Fig. 8 ist schematisch die ideale Strahlabbildung mit dem Bezugszeichen 230 dargestellt, wie sie ohne die Oberflächenstruktur 228 erreicht ist. Aufgrund der Oberflächenstruktur ergeben sich die mit dem Bezugszeichen 232 angegebenen veränderten Strahlen, so dass der nicht-ausgeleuchtete Bereich 226b des Empfangsstrahls 226 reduziert wird, und insbesondere im Bereich des optischen Empfängers 214 bzw. im Bereich der aktiven Oberfläche 209 desselben, die Lücke 226b geschlossen ist.

Gemäß Ausführungsbeispielen umfasst die Oberflächenstruktur 228 eine Ausgestaltung der Oberflächen der Optik 214 mit einer vorbestimmten Oberflächenrauigkeit bzw. die auf die Optik 214 aufgebrachte Schicht ist mit einer solchen Oberflächenrauigkeit versehen. Gemäß wiederum anderen Ausführungsbeispielen kann anstelle einer vorgegebenen Oberflächenrauigkeit auch eine Strukturierung der aufgebrachten Schicht bzw. der Oberflächen der Optik 214 durchgeführt werden, so dass sich vorbestimmte, sich wiederholende Strukturen ergeben, die zur Veränderung der Strahlen auf die oben beschriebene Art und Weise führen.

Der Abstand der Sende/Empfangs-Einheiten 200a, 200b, die in einer Vorrichtung entsprechend den Fig. 6 und 7 angeordnet sind, kann, anders als beim Stand der Technik, gering gehalten werden, beispielsweise kleiner als der Durchmesser der Sende/Empfangs-Einheiten, da aufgrund der erfindungsgemäßen Ausgestaltung der Sende/Empfangs-Einheiten auch bei geringem Abstand und einer Verdrehung der Sende/Empfangs-Einheiten 200a, 200b zueinander stets der Sendestrahl 222, der von der sendenden Einheit bereitgestellt wird, auf die Empfangsoptik der empfangenen Einheit auftrifft, die das auftreffende Licht auf die Fotodiode leitet, so dass auch bei geringerem Abstand und einer Verdrehung eine zuverlässige Datenübertragung bzw. Datenverbindung auch bei einer Verdrehung sichergestellt ist.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Optische Sende/Empfangs-Einheit (200), mit
einem Träger (210), der um eine Drehachse (206) drehbar ist,
einem optischen Empfänger (204), der an dem Träger (210) auf der Drehachse (206) angeordnet ist, um ein optisches Empfangssignal (226) aus einer ersten Richtung zu empfangen,
einem optischen Sender (202), der benachbart zu dem optischen Empfänger (204) an dem Träger (210) angeordnet ist, um ein optisches Sendesignal in einer zweiten Richtung auszusenden, und
einer Sende/Empfangs-Optik (214), die an dem Träger (210) auf der Drehachse (206) oberhalb des optischen Empfängers (204) angeordnet ist und sich über den optischen Empfänger (204) und den optischen Sender (202) erstreckt, wobei die Sende/Empfangs-Optik (214) eine Empfangsoptik (218) und eine in der Empfangsoptik (218) angeordnete Sendeoptik (220) umfasst,
wobei die Empfangsoptik (218) ausgebildet ist, um das auf die Sende/EmpfangsOptik (214) auftreffende optische Empfangssignal (226) in Richtung des optischen Empfängers (204) auf der Drehachse (206) zu lenken, und
wobei die Sendeoptik (220) oberhalb des optischen Senders (202) angeordnet ist und ausgebildet ist, um das von dem optischen Sender (202) ausgesendete optische Sendesignal (208) in einen Ausgangsstrahl zu formen, und
wobei die Sendeoptik (220) zumindest teilweise in der Empfangsoptik (218) angeordnet ist, wobei ein dem optischen Sender (202) abgewandter Abschnitt der Sendeoptik (220) eine Strahlformungsfläche (220b) zum Formen des optischen Sendesignals (208) bildet,
**dadurch gekennzeichnet, dass**
die Empfangsoptik (218) eine Empfangslinse ist, die sich über den optischen Empfänger (204) und den optischen Sender (202) erstreckt, und
die Strahlformungsfläche (220b)
zumindest teilweise in einer dem optischen Empfänger (204) abgewandten Oberfläche (218b) der Empfangsoptik (218) gebildet ist, oder
zumindest teilweise über die dem optischen Empfänger (204) abgewandte Oberfläche (218b) der Empfangsoptik (218) hervorsteht oder bezüglich dieser zurückgesetzt ist.

2. Optische Sende/Empfangs-Einheit (200) gemäß Anspruch 1, bei der die Sendeoptik (220) in die Empfangsoptik (218) integriert ist.

3. Optische Sende/Empfangs-Einheit (200) gemäß Anspruch 1 oder 2, bei der ein dem optischen Sender (202) zugewandter Abschnitt der Sendeoptik (220) eine weitere Strahlformungsfläche (220a) zum Formen des optischen Sendesignals (208) bildet, wobei die weitere Strahlformungsfläche (220a)
zumindest teilweise in einer dem optischen Empfänger (204) zugewandten Oberfläche (218a) der Empfangsoptik (218) gebildet ist, oder
zumindest teilweise über die dem optischen Empfänger (204) zugewandte Oberfläche (218a) der Empfangsoptik (218) hervorsteht oder bezüglich dieser zurückgesetzt ist.

4. Optische Sende/Empfangs-Einheit (200) gemäß Anspruch 3, bei der die dem optischen Empfänger (204) zugewandte Oberfläche (218a) der Empfangsoptik (218) durch den dem optischen Sender (202) zugewandten Abschnitt der Sendeoptik (220) in zwei Abschnitte unterteilt ist, so dass die dem optischen Empfänger (204) abgewandte Oberfläche (218b) der Empfangsoptik (218) und die zwei Abschnitte der dem optischen Empfänger (204) zugewandte Oberfläche (218a) der Empfangsoptik (218) das auf die Empfangsoptik (218) auftreffende optische Empfangssignal (226) in Richtung des optischen Empfängers (204) auf der Drehachse (206) lenken.

5. Optische Sende/Empfangs-Einheit (200) gemäß einem der vorhergehenden Ansprüche, bei der die dem optischen Empfänger (204) zugewandte Oberfläche (218a) und/oder die dem optischen Empfänger (204) abgewandte Oberfläche (218b) der Empfangsoptik (218) eine bestimmte Oberflächenstruktur (228) aufweist, so dass aufgrund der in der Empfangsoptik (218) angeordneten Sendeoptik (220) nicht ausgeleuchtete Bereiche zwischen der Empfangsoptik (218) und dem Träger (210) ausleuchtet werden.

6. Optische Sende/Empfangs-Einheit (200) gemäß einem der vorhergehenden Ansprüche, bei der die dem optischen Empfänger (204) zugewandte Oberfläche (218a) und/oder die dem optischen Empfänger (204) abgewandte Oberfläche (218b) der Empfangsoptik (218) mit einer Schicht mit einer bestimmten Oberflächenstruktur (228) versehen sind, so dass aufgrund der in der Empfangsoptik (218) angeordneten Sendeoptik (220) nicht ausgeleuchtete Bereiche zwischen der Empfangsoptik (218) und dem Träger (210) ausleuchtet werden.

7. Optische Sende/Empfangs-Einheit (200) gemäß Anspruch 5 oder 6, bei der die bestimmte Oberflächenstruktur (228) eine vorbestimmte Oberflächenrauigkeit oder eine vorbestimmte sich wiederholende Struktur aufweist.

8. Optische Sende/Empfangs-Einheit (200) gemäß einem der Ansprüche 5 bis 7, bei der Abschnitte der Empfangsoptik(218), an denen eine Strahlformungsfläche (220a, 220b) angeordnet ist, ohne Oberflächenstruktur (228) ausgebildet sind.

9. Optische Sende/Empfangs-Einheit (200) gemäß einem der vorhergehenden Ansprüche, bei der der Träger (210) eine Trägeroberfläche (212) aufweist, von der sich die Drehachse (206) senkrecht erstreckt.

10. Optische Sende/Empfangs-Einheit (200) gemäß Anspruch 9, bei der der optische Empfänger (204) und der optische Sender (202) auf der Trägeroberfläche (212) angeordnet sind, oder bei der der optische Empfänger (204) und der optische Sender (202) an der Trägeroberfläche (212) mit gleichen oder unterschiedlichen Abständen von der Trägeroberfläche (212) angeordnet sind.

11. Optische Sende/Empfangs-Einheit (200) gemäß einem der vorhergehenden Ansprüche, mit zumindest einem weiteren optischen Sender (202', 202"), der benachbart zu dem optischen Empfänger (204) an dem Träger (210) angeordnet ist, wobei die Sende/Empfangs-Optik (214) zumindest eine weitere Sendeoptik (220) aufweist, die in der Empfangsoptik (218) angeordnet oder integriert ist, wobei die weitere Sendeoptik (220) einen Teil der Empfangsoptik (218) überdeckt.

12. Optische Sende/Empfangs-Einheit (200) gemäß einem der vorhergehenden Ansprüche, bei der der optische Empfänger (204) eine Photodiode, PD, umfasst, und bei der der optische Sender (202) eine Laserdiode, LD, oder eine Licht emittierende Diode, LED, umfasst.

13. Optische Sende/Empfangs-Einheit (200) gemäß einem der vorhergehenden Ansprüche, bei der eine Wellenlänge des optischen Empfangssignals (226) und des optischen Sendesignals (208) im ultravioletten Bereich, im sichtbaren Bereich oder im Infrarotbereich liegt.

14. Vorrichtung (300) zur Signalübertragung, mit
zumindest einer ersten optischen Sende/Empfangs-Einheit (200a) gemäß einem der vorhergehenden Ansprüche; und
zumindest einer zweiten optischen Sende/Empfangs-Einheit (200b) gemäß einem der vorhergehenden Ansprüche;
wobei die erste und die zweite optische Sende/Empfangs-Einheit (200a, 200b) derart zueinander angeordnet sind, dass ein Sendestrahl (222) einer Sende/EmpfangsEinheit (200a) die Empfangsoptik einer gegenüberliegenden Sende/EmpfangsEinheit (200b) beleuchtet.

15. Vorrichtung (300) gemäß Anspruch 14, die für eine bidirektionale Übertragung in beiden Richtungen oder für eine unidirektionale Übertragung in nur einer Richtung ausgelegt ist.

16. Vorrichtung (300) gemäß Anspruch 14 oder 15, bei der die Drehachsen (206) der ersten und der zweite optischen Sende/Empfangs-Einheit (200a, 200b) eine gemeinsame Achse bilden, oder bei der die Drehachsen (206, 206') der ersten und der zweite optischen Sende/Empfangs-Einheit (200a, 200b) einen bestimmten Versatz aufweisen.

17. Vorrichtung (300) gemäß einem der Ansprüche 14 bis 16, bei der die erste und die zweite optische Sende/Empfangs-Einheit (200a, 200b) mit einem Abstand zueinander angeordnet sind, wobei
der Abstand kleiner ist als ein Durchmesser der Sende/Empfangs-Einheiten.

## Claims

1. An optical transmission/reception unit (200), comprising:
a carrier (210) rotatable about a rotational axis (206),
an optical receiver (204) arranged at the carrier (210) on the rotational axis (206) so as to receive an optical reception signal (226) out of a first direction,
an optical transmitter (202) arranged adjacent to the optical receiver (204) at the carrier (210) so as to emit an optical transmission signal in a second direction, and
a transmission/reception optic (214) arranged at the carrier (210) on the rotational axis (206) above the optical receiver (204) and extending across the optical receiver (204) and the optical transmitter (202), wherein the transmission/reception optic (214) includes a reception optic (218) and a transmission optic (220) arranged in the reception optic (218),
wherein the reception optic (218) is configured to guide the optical reception signal (226) incident on the transmission/reception optics (214) towards the optical receiver (204) on the rotational axis (206), and
wherein the transmission optic (220) is arranged above the optical transmitter (202) and is configured to shape the optical transmission signal (208) emitted by the optical transmitter (202) into an output beam, and
wherein the transmission optic (220) is at least partially arranged in the reception optic (218) wherein a portion of the transmission optic (220) facing away from the optical transmitter (202) forms a beam-shaping surface (220b) for shaping the optical transmission signal (208),
**characterized in that**
the reception optics (218) is a reception lens extending across the optical receiver (204) and the optical transmitter (202), and
the beam-shaping surface (220b)
is formed at least partially in a surface (218b) of the reception optic (218) facing away from the optical receiver (204), or
at least partially projects beyond the surface (218b) of the reception optic (218) facing away from the optical receiver (204) or is recessed with respect to the same.

2. The optical transmission/reception unit (200) according to claim 1, wherein the transmission optic (220) is integrated into the reception optic (218).

3. The optical transmission/reception unit (200) according to claim 1 or 2, wherein a portion of the transmission optic (220) facing the optical transmitter (202) forms a further beam-shaping surface (220a) for shaping the optical transmission signal (208), wherein the further beam-shaping surface (220a)
is formed at least partially in a surface (218a) of the reception optic (218) facing the optical receiver (204), or
at least partially projects beyond the surface (218a) of the reception optic (218) facing the optical receiver (204) or is recessed with respect to the same.

4. The optical transmission/reception unit (200) according to claim 3, wherein the surface (218a) of the reception optic (218) facing the optical receiver (204) is divided into two portions by the portion of the transmission optic (220) facing the optical transmitter (202) so that the surface (218b) of the reception optic (218) facing away from the optical receiver (204) and the two portions of the surface (218a) of the reception optic (218) facing the optical receiver (204) guide the optical reception signal (226) incident on the reception optic (218) towards the optical receiver (204) on the rotational axis (206).

5. The optical transmission/reception unit (200) according to any one of the preceding claims, wherein the surface (218a) facing the optical receiver (204) and/or the surface (218b) facing away from the optical receiver (204), each being of the reception optic (218), comprise a specified surface structure (228) so that, due to the transmission optic (220) arranged in the reception optic (218), non-illuminated regions between the reception optic (218) and the carrier (210) are illuminated.

6. The optical transmission/reception unit (200) according to any one of the preceding claims, wherein the surface (218a) facing the optical receiver (204) and the surface (218b) facing away from the optical receiver (204), each being of the reception optic (218), are provided with a layer having a specified surface structure (228) so that, due to the transmission optic (220) arranged in the reception optic (218), non-illuminated regions between the reception optic (218) and the carrier (210) are illuminated.

7. The optical transmission/reception unit (200) according to claim 5 or 6, wherein the specified surface structure (228) comprises a predetermined surface roughness or a predetermined repeating structure.

8. The optical transmission/reception unit (200) according to any one of claims 5 to 7, wherein portions of the reception optic (218) at which a beam-shaping surface (220a, 220b) is arranged, are formed without a surface structure (228).

9. The optical transmission/reception unit (200) according to any one of the preceding claims, wherein the carrier (210) comprises a carrier surface (212) from which the rotational axis (206) extends perpendicularly.

10. The optical transmission/reception unit (200) according to claim 9, wherein the optical receiver (204) and the optical transmitter (202) are arranged on the carrier surface (212), or wherein the optical receiver (204) and the optical transmitter (202) are arranged at the carrier surface (212) with the same or different distances to the carrier surface (212).

11. The optical transmission/reception unit (200) according to any one of the preceding claims, having at least one further optical transmitter (202', 202") arranged adjacent to the optical receiver (204) at the carrier (210), wherein the transmission/reception optic (214) comprises at least one further transmission optic (220) arranged in the reception optic (218) or integrated into the same, wherein the further transmission optic (220) covers a part of the reception optic (218).

12. The optical transmission/reception unit (200) according to any one of the preceding claims, wherein the optical receiver (204) includes a photo diode, PD, and wherein the optical transmitter (202) includes a laser diode, LD, or a light-emitting diode, LED.

13. The optical transmission/reception unit (200) according to any one of the preceding claims, wherein a wavelength of the optical reception signal (226) and the optical transmission signal (208) is in the ultraviolet range, in the visible range, or in the infrared range.

14. An apparatus (300) for signal transfer, comprising
at least one first optical transmission/reception unit (200a) according to any one of the preceding claims; and
at least one second optical transmission/reception unit (200b) according to any one of the preceding claims;
wherein the first and the second optical transmission/reception unit (200a, 200b) are arranged in such a way with respect to each other that a transmission beam (222) of a transmission/reception unit (200a) illuminates the reception optic (218b) of an opposite transmission/reception unit (200b).

15. The apparatus (300) according to claim 14, configured for a bidirectional transfer in both directions or for a unidirectional transfer in only one direction.

16. The apparatus (300) according to claim 14 or 15, wherein the rotational axes (206) of the first and second optical transmission/reception units (200a, 200b) form a mutual axis, or wherein the rotational axes (206, 206') of the first and the second optical transmission/reception units (200a, 200b) comprise a specified offset.

17. The apparatus (300) according to any one of claims 14 to 16, wherein the first and second optical transmission/reception units (200a, 200b) are arranged in a distance to each other, wherein
the distance is smaller than a diameter of the transmission/reception units.

## Revendications

1. Unité d'émission/réception optique (200), avec:
un support (210) qui peut tourner autour d'un axe de rotation (206),
un récepteur optique (204) qui est disposé sur le support (210) sur l'axe de rotation (206) et destiné à recevoir un signal de réception optique (226) à partir d'une première direction,
un transmetteur optique (202) qui est disposé adjacent au récepteur optique (204) sur le support (210) et destiné à émettre un signal de transmission optique dans une deuxième direction, et
une optique d'émission/réception (214) qui est disposée sur le support (210) sur l'axe de rotation (206) au-dessus du récepteur optique (204) et qui s'étend au-dessus du récepteur optique (204) et étend le transmetteur optique (202), où l'optique d'émission/réception (214) comporte une optique de réception (218) et une optique d'émission (220) disposée dans l'optique de réception (218),
dans laquelle l'optique de réception (218) est conçue pour diriger le signal de réception optique (226) arrivant sur l'optique d'émission/réception (214) en direction du récepteur optique (204) sur l'axe de rotation (206), et
dans laquelle l'optique d'émission (220) est disposée au-dessus du transmetteur optique (202) et est conçue pour mettre en forme le signal de transmission optique (208) émis par le transmetteur optique (202) pour obtenir un faisceau de sortie, et
dans laquelle l'optique d'émission (220) est disposée au moins partiellement dans l'optique de réception (218), dans laquelle un segment de l'optique d'émission (220) orienté en s'éloignant du transmetteur optique (202) forme une surface de mise en forme du faisceau (220b) destinée à mettre en forme le signal de transmission optique (208),
**caractérisée par le fait que**
l'optique de réception (218) est une lentille de réception qui s'étend au-dessus du récepteur optique (204) et du transmetteur optique (202), et
la surface de mise en forme du faisceau (220b)
est formée au moins partiellement dans une surface (218b) de l'optique de réception (218) orientée en s'éloignant du récepteur optique (204), ou
qui ressort au moins partiellement de la surface (218b) de l'optique de réception (218) orientée en s'éloignant du récepteur optique (204) ou qui est en retrait par rapport à cette dernière.

2. Unité d'émission/réception optique (200) selon la revendication 1, dans laquelle l'optique d'émission (220) est intégrée dans l'optique de réception (218).

3. Unité d'émission/réception optique (200) selon la revendication 1 ou 2, dans laquelle un segment de l'optique d'émission (220) orienté vers le transmetteur optique (202) forme une autre surface de mise en forme de faisceau (220a) destinée à mettre en forme le signal de transmission optique (208), dans laquelle l'autre surface de mise en forme de faisceau (220a)
est formée au moins partiellement dans une surface (218a) de l'optique de réception (218) orientée vers le récepteur optique (204), ou
qui ressort au moins partiellement de la surface (218a) de l'optique de réception (218) orientée vers le récepteur optique (204) ou qui est en retrait par rapport à cette dernière.

4. Unité d'émission/réception optique (200) selon la revendication 3, dans lequel la surface (218a) de l'optique de réception (218) orientée vers le récepteur optique (204) est subdivisée en deux segments par le segment de l'optique d'émission (220) orienté vers le transmetteur optique (202), de sorte que la surface (218b) de l'optique de réception (218) orientée en s'éloignant du récepteur optique (204) et les deux segments de la surface (218a) de l'optique de réception (204) orientées vers le récepteur optique (204) dirigent le signal de réception optique (226) arrivant sur l'optique de réception (218) en direction du récepteur optique (204) sur l'axe de rotation (206).

5. Unité d'émission/réception optique (200) selon l'une des revendications précédentes, dans laquelle la surface (218a) orientée vers le récepteur optique (204) et/ou la surface (218b) de l'optique de réception orientée en s'éloignant du récepteur optique (204) de l'optique de réception (218) présente une structure de surface déterminée (228), de sorte que soient éclairées les zones entre l'optique de réception (218) et le support (210) non éclairées du fait de l'optique d'émission (220) disposée dans l'optique de réception (218).

6. Unité d'émission/réception optique (200) selon l'une des revendications précédentes, dans laquelle la surface (218a) orientée vers le récepteur optique (204) et/ou la surface (218b) de l'optique de réception (218) orientée en s'éloignant du récepteur optique (204) sont pourvus d'une couche avec une structure de surface déterminée (228), de sorte que soient éclairées les zones non éclairées entre l'optique de réception (218) et le support (210) du fait de l'optique d'émission (220) disposée dans l'optique de réception (218).

7. Unité d'émission/réception optique (200) selon la revendication 5 ou 6, dans laquelle la structure de surface déterminée (228) présente une rugosité de surface prédéterminée ou une structure prédéterminée qui se répète.

8. Unité d'émission/réception optique (200) selon l'une des revendications 5 à 7, dans laquelle les segments de l'optique de réception (218) sur lesquels est disposée une surface de mise en forme de faisceau (220a, 220b) sont conçues sans structure de surface (228).

9. Unité d'émission/réception optique (200) selon l'une des revendications précédentes, dans laquelle le support (210) présente une surface de support (212) à partir de laquelle l'axe de rotation (206) s'étend verticalement.

10. Unité d'émission/réception optique (200) selon la revendication 9, dans laquelle le récepteur optique (204) et le transmetteur optique (202) sont disposés sur la surface de support (212), ou dans laquelle le récepteur optique (204) et le transmetteur optique (202) sont disposés sur la surface de support (212) à des distances identiques ou différentes de la surface de support (212).

11. Unité d'émission/réception optique (200) selon l'une des revendications précédentes, avec au moins un autre transmetteur optique (202', 202") qui est disposé adjacent au récepteur optique (204) sur le support (210)., dans laquelle l'optique d'émission/réception (214) présente au moins une autre optique d'émission (220) qui est disposée ou intégrée dans l'optique de réception (218), dans laquelle l'autre optique d'émission (220) recouvre une partie de l'optique de réception (218).

12. Unité d'émission/réception optique (200) selon l'une des revendications précédentes, dans laquelle le récepteur optique (204) comporte une photodiode, PD, et dans laquelle le transmetteur optique (202) comporte une diode laser, LD, ou une diode électroluminescente, LED.

13. Unité d'émission/réception optique (200) selon l'une des revendications précédentes, dans laquelle une longueur d'onde du signal de réception optique (226) et du signal de transmission optique (208) se situe dans la plage ultraviolette, dans la plage visible ou dans la plage infrarouge.

14. Dispositif (300) de transmission de signal, avec
au moins une première unité d'émission/réception optique (200a) selon l'une des revendications précédentes; et
au moins une deuxième unité d'émission/réception optique (200b) selon l'une des revendications précédentes;
dans lequel la première et la deuxième unité d'émission/réception optique (200a, 200b) sont disposées l'une par rapport à l'autre de sorte qu'un faisceau d'émission (222) d'une unité d'émission/réception (200a) éclaire l'optique de réception d'une unité d'émission/réception opposée.

15. Dispositif (300) selon la revendication 14, qui est conçu pour une transmission bidirectionnelle dans les deux directions ou pour une transmission unidirectionnelle dans une seule direction.

16. Dispositif (300) selon la revendication 14 ou 15, dans lequel les axes de rotation (206) de la première et de la deuxième unité d'émission/réception optique (200a, 200b) forment un axe commun, ou dans lequel les axes de rotation (206, 206') de la première et de la deuxième unité d'émission/réception optique (200a, 200b) présentent un décalage déterminé.

17. Dispositif (300) selon l'une des revendications 14 à 16, dans lequel la première et de la deuxième unité d'émission/réception optique (200a, 200b) sont disposées à une distance l'une de l'autre, dans lequel
la distance est inférieure à un diamètre des unités d'émission/réception.
